Europäisches Patentamt

European Patent Office

Office européen des brevets

(11) Publication number: 0 276 565
A1

## (12) EUROPEAN PATENT APPLICATION

(21) Application number: 87311249.4

(22) Date of filing: 21.12.87

(51) Int. Cl.⁴ B60R 25/02

(30) Priority: 19.12.86 AU 9583/86

(43) Date of publication of application:
03.08.88 Bulletin 88/31

(84) Designated Contracting States:
AT BE CH DE ES FR GB GR IT LI LU NL SE

(71) Applicant: Ramsay, Ian Morgan
21 King Road
Hornsby 2077 New South Wales(AU)

(72) Inventor: Ramsay, Ian Morgan
21 King Road
Hornsby 2077 New South Wales(AU)

(74) Representative: Wotherspoon, Graham et al
FITZPATRICKS 4 West Regent Street
Glasgow G2 1RS Scotland(GB)

(54) Anti-theft device.

(57) The device, for use in vehicles, releasably se-
cures the steering wheel to the steering wheel col-
umn by a locking means which, when deactivated,
disengages the steering wheel from the column. In
one embodiment, the steering wheel is connected to
the hub (37, 38) of the device and the hub is fixed to
a connector (34) which is fixed by a splined bore
(35) to the steering column. To lock the hub to the
connector, a key is inserted into a keyhole in the
hub, and the locking mechanism on the hub op-
erated, whereby when the lock bolt (39) of said
mechanism and a bolt receiving recess (40) in the
connector (35) are aligned, the lock bolt (39) en-
gages into the recess (40), thus fixedly connecting
the steering wheel to the steering wheel column.
When the lock is deactivated the lock bolt (39)
disengages from the recess (40). An ignition lock
switch (31) is connected to the recess (40) whereby
the ignition is disabled unless the lock bolt (39) is
fully extended into the recess, this will ensure that a
motorist cannot drive off with the steering wheel
disengaged.

FIG.11

## ANTI-THEFT DEVICE

The present invention relates to an anti-theft device for motor vehicles, and in particular to an anti-theft device which deactivates the steering wheel from the steering box.

Today there is an increasing problem with the theft of motor vehicles, despite the use of car alarms or anti-theft devices such as "crooklocs" which connects the brake or clutch pedal to the steering wheel to inhibit the turning of the steering wheel and hence preventing steering of the vehicle.

The disadvantages of alarms is that of their activation as false alarms due to faulty workmanship or environmental factors, and/or the apathy of people in the vicinity of the vehicle on activation of the alarm.

Unfortunately either the alarm is deactivated or ceases to activate after a predetermined time whereby the thief is able to "hot wire" the vehicle and drive away. With the case of devices such as "crooklocs" the steering wheel rim could be cut through to remove the "crookloc" from the steering wheel or the brake or clutch pedal was bent such that the "crookloc" was disengaged from the brake or clutch pedal, to allow complete steering of the vehicle.

The present invention seeks to ameliorate the beforementioned disadvantages by providing an anti-theft device for vehicles wherein the steering wheel is releasably secured to the steering wheel column such that the steering wheel is disengaged from the steering wheel column be deactivation of a locking means.

The present invention will now be described by way of example with reference to the accompanying drawings in which:

Fig. 1 is a plan view (with ghosting of the hub for connection to the steering wheel according to one embodiment of the present invention;

Fig. 2 is a side elevation of the hub as shown in Fig. 1;

Fig. 3 is a plan view of a connection to the steering wheel column according to the above embodiment of the present invention;

Fig. 4 is a section side elevation of the connection as illustrated in Fig. 3;

Fig. 5 illustrates a sectional side elevation of a connection of a steering wheel column according to another embodiment of the present invention;

Fig. 6 illustrates the hub for connection to a steering wheel according to the embodiment of the invention illustrated in Fig. 5;

Fig. 7 illustrates a plan view with ghosting of the hub illustrated in Fig. 6.

Fig. 8 is a cross-sectional view of another embodiment of the invention with the steering wheel in the unlocked position;

Fig. 9 is the same view as Fig. 8 with the wheel in the locked position;

Fig. 10 is a cross-sectional view of another embodiment of the present invention with the locked means in the steering wheel engaged position; and Fig. 11 is the same view as Fig. 10 with the locked means in the steering wheel free position.

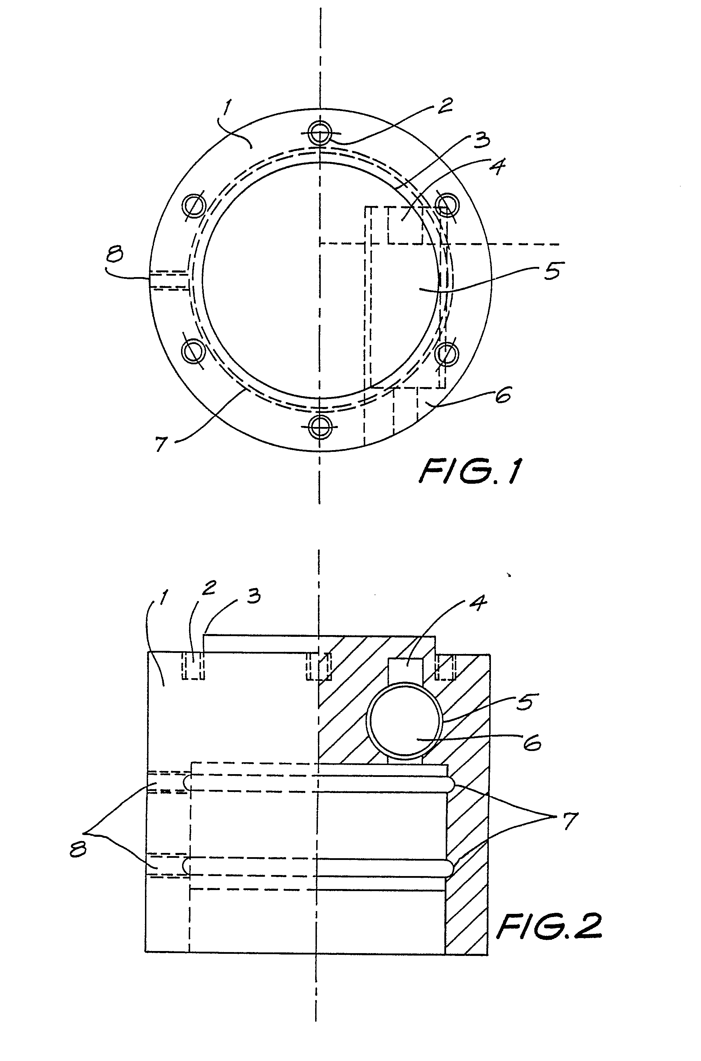

A first embodiment of the present invention is illustrated in Figs. 1 to 4, whereby a steering wheel (not shown) is connected to the hub 1 of the anti-theft device by means of screws or the like engaging in the fixing means 2, with the locking spigot 3 waiting with an appropriate recess in the steering wheel.

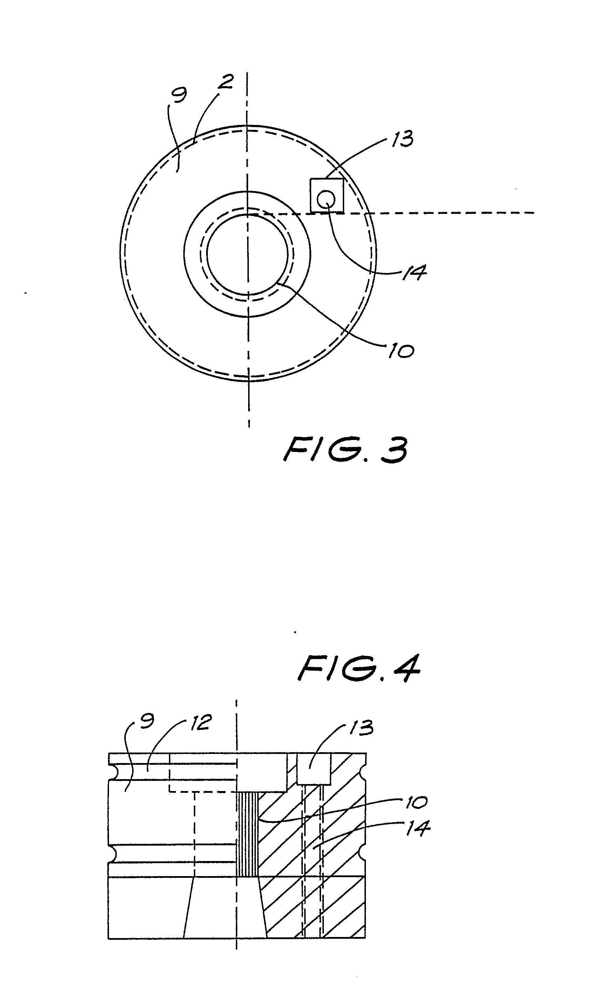

The hub 1 as illustrated in Figs. 1 & 2 comprises a lock retention recess 6 for the retention of a suitable locking mechanism. A lock bolt cavity is provided to rec̲ ̲ə the lock bolt when the lock is disengaged.

The connector 9 is fitted by means of the splined bore 10 to the steering column (not shown) and mates into the recess 11 of the hub 1. The connector 9 and the hub 1 are fixed together by means of ball bearings formed by the aligment of the annular recess 7 of the hub 1 and the annular recesses 12 of the connector 9. The ball bearings being introduced via the access bores 8.

To lock the hub 1 to the connection 9 a key is inserted into the key hole 6 and the locking mechanism operated whereby, when the lock bolt 4 and the lock bolt receiving recess 13 of the connector 9 is aligned; the lock bolt engages into the recess 13. Thus the steering is connected to the steering wheel column. To deactivate the steering wheel, the lock is deactivated and the locking bolt disengages from the recess 13 of the connector 9 allowing the hub 1 to rotate relative to the connector 9. Thereby, if a vehicle fitted with the anti-theft device of the present invention is broken into, it is not possible to steer the vehicle.

To ensure that a motorist does not attempt to drive off with the steering wheel disengaged an ignition lock switch 14 is connected to the lock bolt receiving recess 13, whereby the ignition is disabled unless the locking bolt is fully extended into the recess 13.

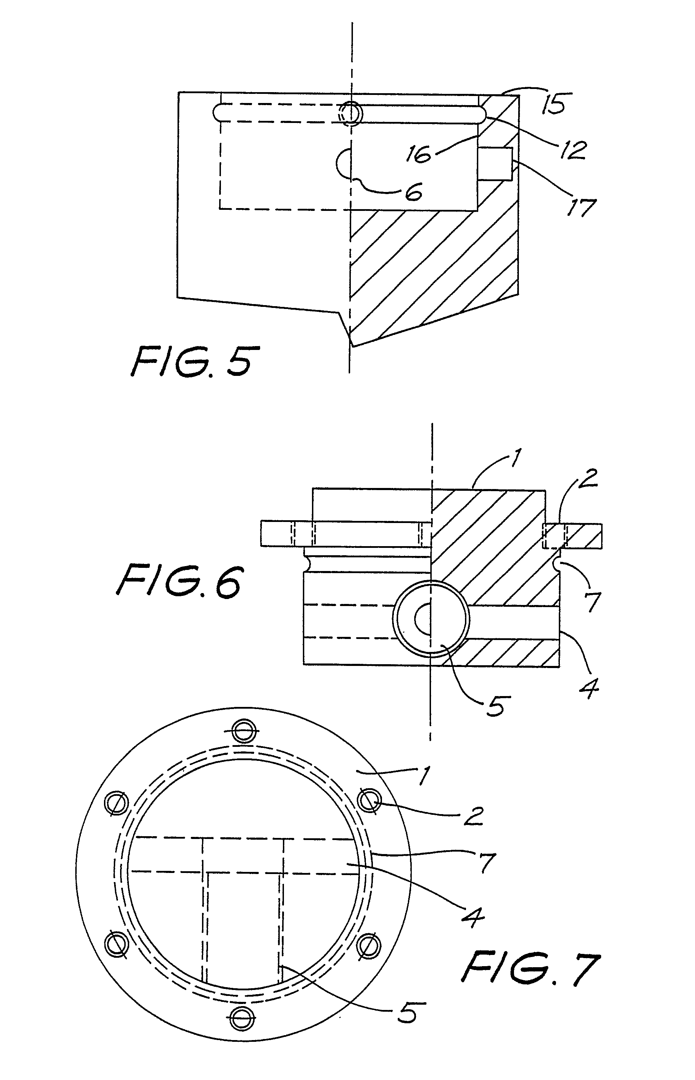

A further embodiment of the anti-theft device is shown in Figs. 5 to 7. The steering colum 15 has a cavity 16, with a locking bolt receiving recess 17. A hub 1, to which a steering wheel can be attached by means of fixing means 2 fits within the cavity 16 with the annular recesses 7 and 12 aligned, to form a raceway for ball bearings which fix the hub 1 to column against axial movement. A lock is retained in the lock retention cavity 5 with the locking bolt moveable along the lock bolt cavity 4.

To engage the steering wheel to the steering column, the lock is activated and the lock bolt engaged into the recess 17. An ignition disable switch can be fitted to the recess 17, to prevent starting of the vehicle with the steering wheel being enabled.

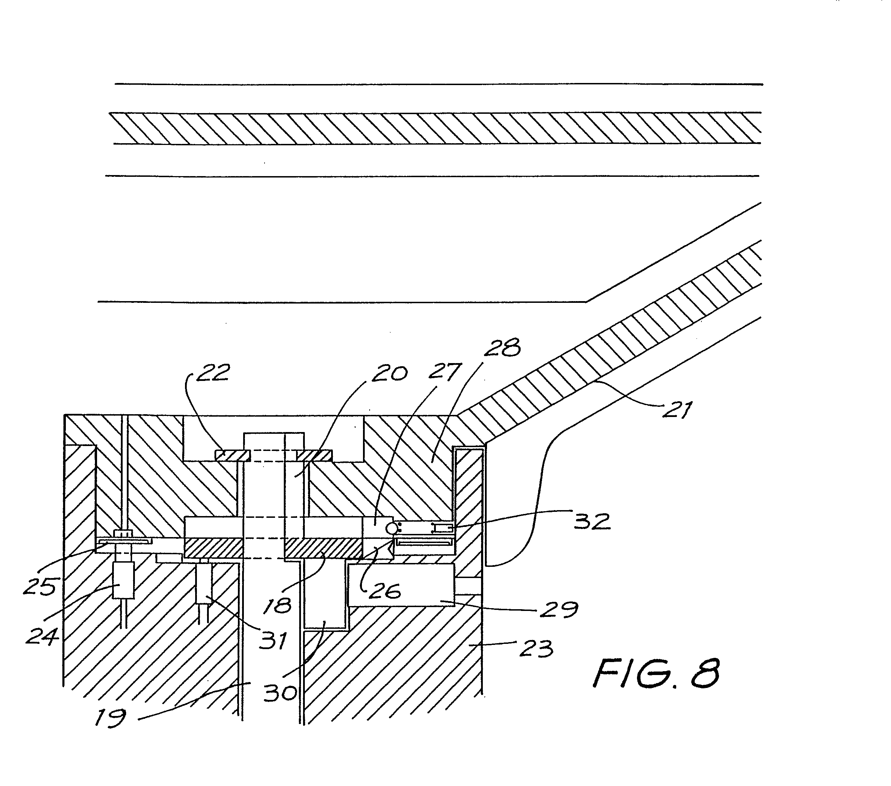

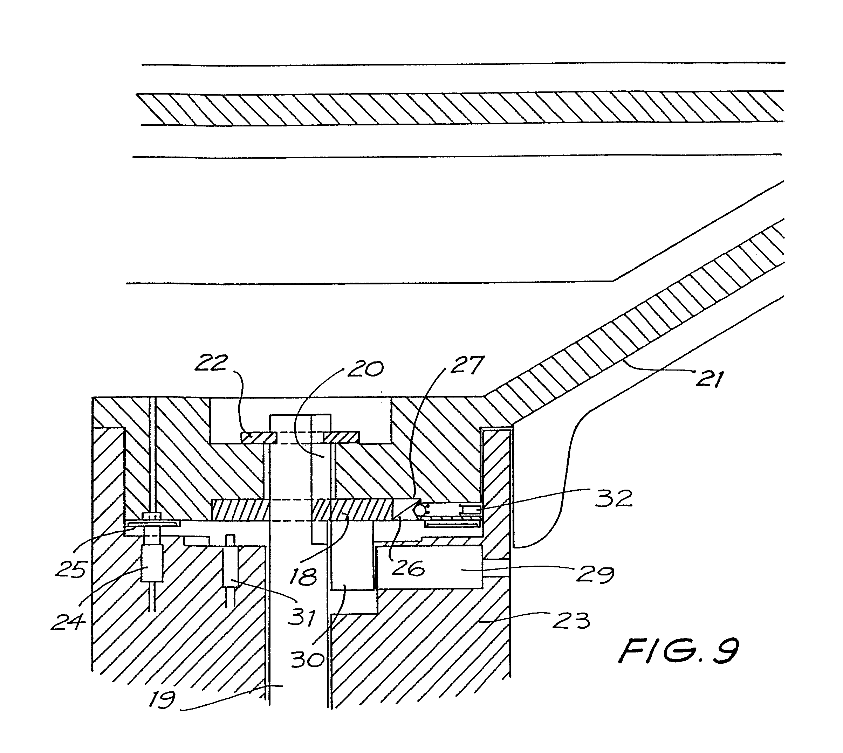

A further embodiment is illustrated in Figs. 8 and 9. This mechanism utilises a sliding dog 18 which moves along the steering shaft 19. The shaft has a key 20 which locks into a recess in the sliding dog. Alternatively the recess could be locked in the steering shaft or else the connection between the two can be of any other suitable means to prevent rotation of the dog 18 around the shaft 19, for example, by the way of splines.

As shown in Fig. 8 the steering wheel 21 is connected over the steering shaft 19 in a rotationally free manner and is held against axial movement by a C clip 22 and sits on the lock housing 23. Standard power supply to the horns and the lock are supplied via the passageway 24 and slipring 25. In Fig.8 the dog 18 is shown in its non-locking position whereby the tang 26 is not engaged in the recess 27 in the steering wheel body 28. A locking assembly 29 is fitted into the lock housing 23 and connects to a cam 30. In this position the dog 18 activates the ignition cutout 31. This cutout can be of any required mechanism such as spring loaded micro switch or a combination of an LED with the complementary optical transistor, to form an opto-coupler. This feature is to ensure that the ignition cannot be engaged if the steering wheel is free to rotate.

To lock the steering wheel 21 to the steering shaft 19 the lock assembly is activated by a key rotating the cam 30 which lifts the dog 18 up the shaft 19 whereby the tank 26 engages in the recess 27 of the steering wheel body 28 with the sliding dog detent 32 being a spring loaded ball engaging in the recess 33 at the end of the tang 26 as shown in Fig. 9 The dog 18 can be spring loaded from both the steering wheel support and the lock housing.

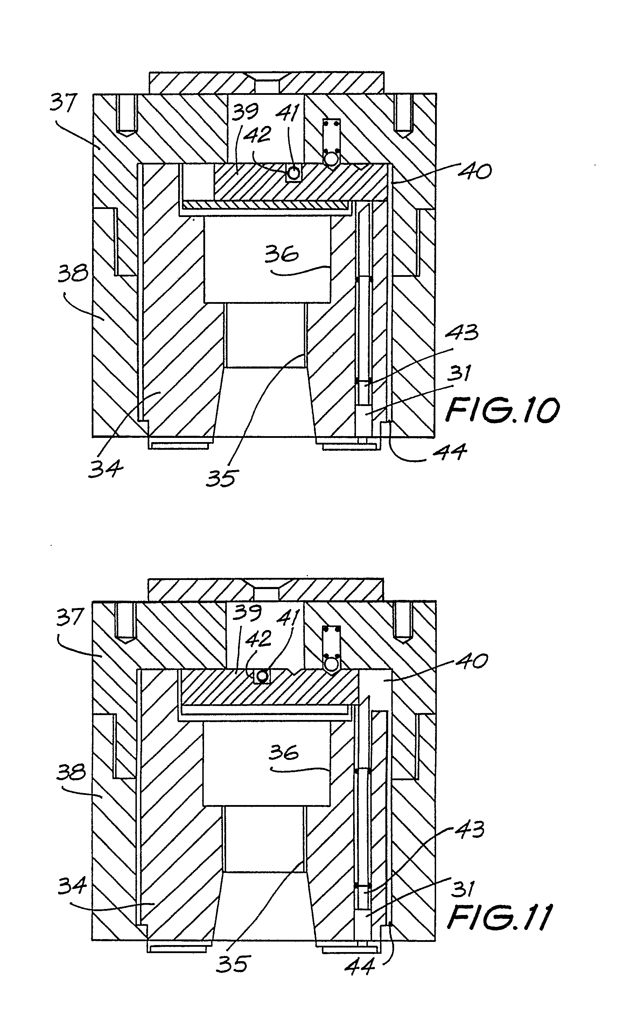

Another embodiment is shown in Figs. 10 and 11. This embodiment is particularly suited for affixing to standard vehicles whereby the steering wheel is disengaged from the steering shaft and the housing 34 is slid over the splined steering shaft to engage in the splined recess 35 and is locked by any suitable means such as C clip or washer and nut arrangement in the locking recess 36. The steering wheel is connected by any suitable means such as screws or the like to the steering wheel support 37 which is connected to the bottom housing 38 by any suitable means such as screw thread whereby the bottom housing engages underneath the housing 34 on a suitable shoulder to prevent axial movement.

As shown in Fig.10 the longitudinal lock bolt 39 extends into a keyway 40 in the steering wheel support 34 thereby connecting the steering wheel to the steering shaft.

Again an ignition cutout 31 is locked to ensure that the car can only be started when the steering wheel is locked to the steering shaft. Any suitable ignition cutouts can be utilised such as those mentioned in the previous embodiment.

To slide the lock bolt 39 a key lock is utilised which has an eccentric pin 41 which engages in the recess 42 whereby when the lock is turned the eccentric ping slides the lock bolt 39 from the locked position shown in Fig.10 to the unlocked position shown in Fig. 11; freeing the lock bolt 39 from the keyway 40 disengaging the steering wheel from the steering shaft. As the lock bolt 39 moves into the unlocked position the spring loaded pressure pin 43 is allowed to rise disengaging the ignition. An armoured sleeve 44 surrounds the housing.

The variations of the above are possible whereby in the case of the embodiment shown in Figs. 8 and 9 the dog 18 is raised and lowered via a yoke with or without spring assist.

It should therefore be obvious that other movements or variations can be made by people skilled in the art which would not avoid the spirit or scope of the present invention.

The locks could be of any suitable types and the components made from any suitable materials.

It should be obvious to people skilled in the art that modifications and alterations can be made to the above described anti-theft device without departing from the spirit or the scope of the present invention.

## Claims

1. An anti-theft device for vehicles wherein the steering wheel is releasably secured to the steering wheel shaft such that the steering wheel is disengaged from the steering wheel shaft by deactivation of a locking means.

2. An anti-theft device according to claim 1 wherein the locking means has a keylock located in a housing securable to the steering shaft.

3. An anti-theft device according to claim 1 wherein the locking means has a key lock located in a housing securable to the steering wheel.

4. An anti-theft device according to claim 3 wherein the locking means has a locking bolt which moves axially of the steering shaft and engages into a recess in a housing connected to the steering shaft.

5. An anti-theft device according to claim 3 wherein the key lock activates at least on laterally movable locking bolt which engages in a recess in the steering shaft or a housing secured to the steering shaft.

6. An anti-theft device according to claim 1 wherein the locking means comprising a locking bolt located in a housing, adapted to engage the steering shaft, and which in the locking position engages into a keyway in a housing to which the steering shaft can be received.

7. An anti-theft device according to claim 6 wherein the locking means comrises a key lock having an eccentric pin which engages in a recess in said locking bolt to move said locking bolt between positions.

8. An anti-theft device according to claim 1 wherein said locking means comprises a locking means which moves axially of the steering wheel shaft to engage or disengage the steering wheel from the steering wheel shaft, and is rotationally secured to the shaft.

9. An anti-theft device according to claim 8 wherein the locking means includes a cam to raise or lower the locking means which engages in a recess in a housing supporting the steering wheel.

10 An anti-theft device according to claim 9 wherein the shaft and said locking means are splined

FIG.1

FIG.2

FIG. 3

FIG. 4

FIG. 5

FIG. 6

FIG. 7

FIG. 8

0 276 565

FIG.9

0 276 565

FIG.10

FIG.11

# EUROPEAN SEARCH REPORT

European Patent Office

Application Number

EP 87 31 1249

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-2 520 315 (RENOUX) * Whole document * | 1,2 | B 60 R 25/02 |
| X | US-A-2 731 823 (CREW) * Whole document * | 1,3,4 | |
| X | FR-A-2 575 713 (BERTRAND) * Whole document * | 1,3,5,6 | |
| X | EP-A-0 058 590 (DIAZ) * Whole document * | 1,8 | |
| Y | | 9,10 | |
| X | FR-A- 596 428 (RIARD) * Whole document * | 1,2 | |
| Y | | 9,10 | |

TECHNICAL FIELDS
SEARCHED (Int. Cl.4)

B 60 R

The present search report has been drawn up for all claims

| Place of search | Date of completion of the search | Examiner |
|---|---|---|
| THE HAGUE | 28-03-1988 | DUBOIS B.F.J. |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P0401)